# EUROPÄISCHE PATENTSCHRIFT

(11) **EP 3 175 279 B1**
(45) Veröffentlichungstag und Bekanntmachung des Hinweises auf die Patenterteilung: **15.02.2023**
(21) Anmeldenummer: 15738083.3
(22) Anmeldetag: 15.07.2015
(51) Int. Cl.: G02B 21/28, G02B 21/26

(54) **LICHTMIKROSKOP MIT EINEM PROBENTISCH FÜR DIE KRYO-MIKROSKOPIE**
LIGHT MICROSCOPE HAVING A SAMPLE STAGE FOR CRYOMICROSCOPY
MICROSCOPE OPTIQUE MUNI D'UNE PLATINE PORTE-ÉCHANTILLON POUR LA CRYOMICROSCOPIE

(30) Priorität: 29.07.2014 DE 102014110723
(43) Veröffentlichungstag der Anmeldung: 07.06.2017
(73) Patentinhaber: Leica Mikrosysteme GmbH, 1170 Wien (AT); European Molecular Biology Laboratory, 69117 Heidelberg (DE)
(72) Erfinder: LIHL, Reinhard, A-1120 Wien (AT); BRIGGS, John, 69120 Heidelberg (DE); SCHORB, Martin, 68526 Ladenburg (DE); GAECHTER, Leander, CH-9463 Oberriet SG (CH)
(74) Vertreter: DehnsGermany Partnerschaft von Patentanwälten
(86) Internationale Anmeldenummer: PCT/EP2015/066105
(87) Internationale Veröffentlichungsnummer: WO 2016/016000

(56) Entgegenhaltungen:
- DE-A1-102005 051 386
- DE-A1-102009 044 413
- JP-A- 2011 229 474
- US-A- 3 969 013
- DATABASE WPI Week 198409 Thomson Scientific, London, GB; AN 1984-055374 XP002744156, & SU 1 016 641 A (AS UKR CRYOBIOL) 7. Mai 1983 (1983-05-07)

## Beschreibung

Die Erfindung betrifft ein Lichtmikroskop für die Kryo-Mikroskopie umfassend zumindest ein Objektiv und einen Probentisch mit einer Ausnehmung für einen am Mikroskop kühlbaren Halter für eine Probenträgerfassung, wobei die Ausnehmung von einer Abdeckung bedeckt ist.

Die Kryofixierung ist ein in der Elektronenmikroskopie häufig eingesetztes Probenpräparationsverfahren. Dabei wird eine wasserhaltige Probe sehr rasch auf eine Temperatur von unter -150°C eingefroren (kryofixiert), d.h. sie wird zur Vermeidung der Bildung von Eiskristallen sehr schnell abgekühlt. Die Kryofixierung hat sich als besonders geeignet für strukturbiologische Untersuchungen erwiesen. Die zu untersuchenden Objekte, beispielsweise Zellen, Enzyme, Viren oder Lipidschichten, werden dadurch in einer dünnen, vitrifizierten Eisschicht eingebettet. Der große Vorteil der Kryofixierung liegt darin, dass die biologischen Strukturen in ihrem nativen Zustand erhalten werden können. Unter anderem kann ein biologischer Vorgang zu einem beliebigen Zeitpunkt durch Kryofixierung angehalten und in diesem vitrifizierten Zustand untersucht werden, z.B. im Kryo-Elektronenmikroskop aber auch in einem Lichtmikroskop mit entsprechender Probenkühlung, wobei die Kryo-Lichtmikroskopie vor allem zum Auffinden von relevanten Bereichen in der Probe dient, welche Bereiche vorgemerkt und anschließend in einem Kryo-Elektronenmikroskop genauer betrachtet werden.

Die gefrorenen Proben, die sich in aller Regel auf einem an sich bekannten elektronenmikroskopischen Probenträger, wie beispielsweise einem Netzchen/Grid oder einem Stift für die Rasterelektronenmikroskopie befinden, müssen unter den genannten tiefkalten Bedingungen und unter Ausschluss von Wasser in entsprechende Probenträgerfassungen verbracht werden, welche in der Folge in passende Halterungen in den genannten Mikroskopen verbracht werden können. Eine typische Probenträgerfassung für die Verwendung im Zusammenhang mit der vorliegenden Erfindung ist beispielsweise aus dem Dokument US 8,395,130 B2 bekannt geworden, bei welcher ein Netzchen, welches als Probenträger die tiefkalte Probe trägt, mit Klammerelementen in einer entsprechenden Fassung fixiert werden kann. Hierzu wird flüssiger Stickstoff beispielsweise in einem Styroporbehälter vorgehalten, in welchem Behälter die erforderlichen Manipulationsschritte zum Verbringen des Netzchens in die Probenträgerfassungen erfolgten. Durch die Bildung von tiefkaltem Stickstoffgas aus dem flüssigen Stickstoff wird zum einen die nötige niedrige Temperatur sichergestellt und zum anderen eine wasserfreie Atmosphäre geschaffen, so dass die Kontamination der Proben mit Wasser und in der Folge mit Eiskristallen verhindert wird.

Um die Qualität der gefrorenen Proben nicht zu beeinträchtigen, ist es von großer Bedeutung, dass sie gekühlt und kontaminationsfrei zwischen den zum Einsatz kommenden Bearbeitungsgeräten, wie z.B. Kryofixiereinrichtung, Gefrierbruchvorrichtung, Beschichtungsvorrichtung bzw. Analysegeräten und hier vor allem Kryo-Lichtmikroskop und Kryoelektronenmikroskop, transferiert werden.

Ein Vakuumkryotransfersystem stellt beispielsweise das System "Leica EM VCT100" des Herstellers Leica Microsystems dar, mit dem eine Probenträgerfassung aus einem mit flüssigem Stickstoff gekühlten Manipulationsbehälter entnommen und in die ebenfalls mit flüssigem Stickstoff gekühlte Beobachtungskammer eines Elektronenmikroskops verbracht werden kann.

Gleichwohl könnte mit einer solchen Apparatur eine Probenträgerfassung in den gekühlten Probentisch eines Kryo-Lichtmikroskops transferiert werden. Es ist für den Fachmann selbstverständlich, dass der Begriff "kühlbar" im Zusammenhang mit der vorliegenden Erfindung bedeutet, dass die als kühlbar bezeichneten Bauteile durch spezielle Kühlsysteme, die am Mikroskop vorgesehen bzw. an dieses angeschlossen sind, kühlbar sind, um die Kühlung der tiefkalten Proben während der Beobachtung durch das Mikroskop zu gewährleisten.

Es ist offensichtlich, dass bei der Probenvorbereitung für die Kryo-Mikroskopie ein erheblicher Aufwand betrieben wird, um eine Kontamination der Probe mit Wasser und folglich mit Eiskristallen zu vermeiden. Dies muss klarerweise auch nach dem Transfer der Probe bzw. des Probenträgers oder der Probenträgerfassung in den Arbeitsbereich eines Kryo-Lichtmikroskops sichergestellt sein, wofür im Stand der Technik Probentische für Lichtmikroskope verfügbar sind, die eine Ausnehmung aufweisen, in der sich ein kühlbarer Halter für eine Probenträgerfassung befindet. Neben der Kühlung des Halters wird bei diesen bekannten Probentischen die Ausnehmung mit flüssigem Stickstoff bzw. mit tiefkaltem Stickstoffgas versorgt bzw. gespült, wobei die Ausnehmung mit einer Abdeckung bedeckt ist, um den Stickstoffbedarf zu begrenzen und den Zutritt von Feuchtigkeit aus der Luft zu verhindern, in dem durch das zugeführte bzw. das aus dem flüssigen Stickstoff entstehende Stickstoffgas ein geringfügiger Überdruck aufgebaut wird, sodass Umgebungsluft aus der Ausnehmung hinausgedrückt bzw. am Einströmen gehindert wird. Die Abdeckung ist bei diesen bekannten Lösungen transparent, da sie sich im Strahlengang des Lichtmikroskops befindet. Allerdings kann das Objektiv des Kryo-Lichtmikroskops nur bis direkt an die Abdeckung herangeführt werden, wodurch sich ein nicht unwesentlicher Abstand zwischen dem Objektiv und der Probe ergibt, was wiederum zu einer geringen Apertur und damit einhergehend zu einer geringen Auflösung führt.

US 3,969,013 offenbart eine thermisch kontrollierte Mikroskopieplattform zur Messung von Übergangstemperaturen zwischen -180° C und +600° C. Das Objektiv fokussiert dabei auf die Probe durch ein dünnes, transparentes Plattenelement. Ein ringförmiges Abschirmelement mit moderater Gleitreibung ist in Kontakt mit dem Objektiv des Mikroskops und bildet dabei eine Zwischenkammer.

DE 10 2009 044 413 A1 offenbart einen Drehhalter für mehrere Objektive, sowie einen Rahmen oberhalb des Drehhalters, in dem eine Sprühkühlung vorgesehen ist.

SU 1016641 A offenbart eine Vorrichtung zur mikroskopischen Untersuchung von Objekten bei tiefen Temperaturen. Die Vorrichtung weist einen Deckel und einen Boden aus elastischem Material auf, welche eine Öffnung für ein Objektiv bzw. einen Kondensor aufweisen und eine abgeschlossene innere Kavität bilden.

DE 10 2005 051 386 A1 offenbart eine stark gekühlte und mit Isoliermaterial versehene Messzelle, welche einen Probenträger beinhaltet und auf einem Mikroskoptisch angeordnet ist. Die JP 2011 229474 A offenbart ein Mikroskop mit einer flexiblen Abdeckung zwischen dem Objektiv und einer gleitenden Kontaktabdeckung eines inkubierten Probenraumes, wodurch ein Spalt zwischen der Öffnung in der flexiblen Abdeckung und dem Objektiv zuverlässig verhindert werden soll, da die flexible Abdeckung ständig mit dem Objektiv in Kontakt steht.

Der Erfindung liegt daher die Aufgabe zu Grunde, die Nachteile des Standes der Technik der Kryo-Lichtmikroskopie zu überwinden und bei sicherer Abschirmung der Probe gegenüber Feuchtigkeit eine große Apertur beim Betrachten zu ermöglichen.

Die Erfindung betrifft ein Lichtmikroskop gemäss Anspruch 1, sowie ein Verfahren zum Kühlen eines Halters für eine Probenträgerfassung in einem Lichtmikroskop gemäß Anspruch 1.

Zur Lösung dieser Aufgabe ist ein Lichtmikroskop der eingangs genannten Art erfindungsgemäß durch die Merkmale von Anspruch 1 weitergebildet.

Zu den Merkmalen des Lichtmikroskops gehören, dass der Probentisch in zwei Horizontalrichtungen verschiebbar ist, die Abdeckung schwimmend auf dem Probentisch liegt und das Objektiv eine dem Objektiv entsprechende Ausnehmung in der Abdeckung durchsetzt. Durch die schwimmende Lagerung der Abdeckung kann die horizontale Verschiebbarkeit des Probentisches beibehalten werden, obwohl das Objektiv die Abdeckung durchsetzt, um das Objektiv zur Erzielung einer großen Apertur unmittelbar an die Probe heranzuführen.

Gemäß Erfindung ist weiterhin die Ausnehmung in der Abdeckung ein kreisrundes Loch, dessen Durchmesser weniger als 2 mm größer ist als der Durchmesser des durch die Abdeckung zu führenden Teils des Objektivs. Diese Abmessungen gestatten es, das Objektiv nach dem Aufsetzen der Abdeckung auf die Ausnehmung im Probentisch ohne große Mühe durch die Ausnehmung in der Abdeckung zu führen und gleichzeitig einen genügend großen Überdruck bei vertretbarem Stickstoffbedarf aufzubauen, um Feuchtigkeit sicher von der Probe fern zu halten.

Wie bereits erwähnt ist in der Kryo-Lichtmikroskopie in einer Ausnehmung des Probentisches ein gekühlter Halter für eine Probenträgerfassung angeordnet. Um zu vermeiden, dass Wärme aus dem Bereich des Probentisches auf die Probe strahlt, ist das erfindungsgemäße Lichtmikroskop bevorzugt dahingehend weitergebildet, dass der Probentisch kühlbar ist. Auf diese Weise wird auch die Umgebung der Probe zuverlässig gekühlt und der gewünschte Zustand der Probe dauerhaft erhalten.

Bevorzugt weisen der Probentisch und/oder der Halter für eine Probenträgerfassung eine Stickstoff-Innenkühlung auf. Eine solche Kühlung beruht darauf, dass flüssiger oder tiefkalter gasförmiger Stickstoff durch eine entsprechende Kühlleitung im Inneren der betreffenden Teile geleitet wird, wodurch es zu einer überaus effizienten Kühlung dieser Teile kommt. Über die Flußrate des Stickstoffs und eine elektrische Heizung kann hierbei die Kühlung exakt reguliert werden.

Bevorzugt weist der Probentisch eine Öffnung zur Zufuhr einer Probenträgerfassung zum Halter für eine Probenträgerfassung auf. Eine solche Öffnung ist bevorzugt seitlich am Probentisch vorgesehen und gestattet den Einschub einer Probe bzw. einer Probenträgerfassung in den Probentisch.

Um jedoch auch dann den Zutritt von feuchter Luft zur Probe im Manipulationsbehälter zu verhindern, wenn kein Einschub in den Probentisch erfolgt, ist die Erfindung bevorzugt dahingehend weitergebildet, dass die Öffnung zur Zufuhr einer Probenträgerfassung mittels einer Verschlusseinrichtung verschließbar ist. Die Verschlusseinrichtung kann hierbei bevorzugt als Schieber, Klappe oder Ähnliches ausgebildet sein.

Für den Anwender ist es trotz des Umstandes, dass die Ausnehmung im Probentisch abgedeckt ist, wesentlich, eine visuelle Kontrolle des Beobachtungsbereichs zu haben. Die Erfindung ist daher bevorzugt dahingehend weitergebildet, dass die Abdeckung eine transparente Doppelscheibe aufweist. Die Transparenz gestattet es, durch die Abdeckung hindurch zu sehen, während das Vorsehen einer Doppelscheibe unerwünschte Kondensationsprobleme aufgrund des Temperaturunterschieds zwischen dem Inneren der Probentisches und der Umgebung hintanhält.

Die Erfindung wird nachfolgend anhand eines in der Zeichnung schematisch dargestellten Ausführungsbeispiels näher erläutert. In dieser zeigen
Fig. 1 eine Gesamtansicht eines erfindungsgemäßen Kryo-Lichtmikroskops,
Fig. 2 eine perspektivische Darstellung des Probentisches des erfindungsgemäßen Kryo-Lichtmikroskops ohne die Abdeckung der Ausnehmung im Probentisch,
Fig. 3 eine perspektivische Darstellung des Probentisches des erfindungsgemäßen Kryo-Lichtmikroskops mit der Abdeckung der Ausnehmung im Probentisch,
Fig. 4 eine teilweise Schnittdarstellung der Durchführung des Objektivs durch die Abdeckung und
Fig. 5 eine teilweise Schnittdarstellung des Halters für eine Probenträgerfassung.

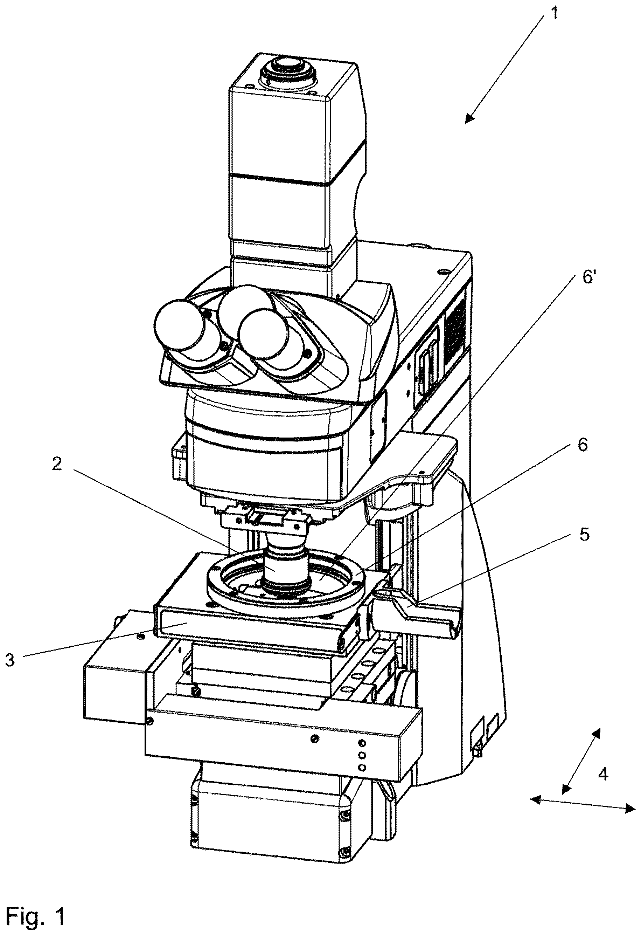

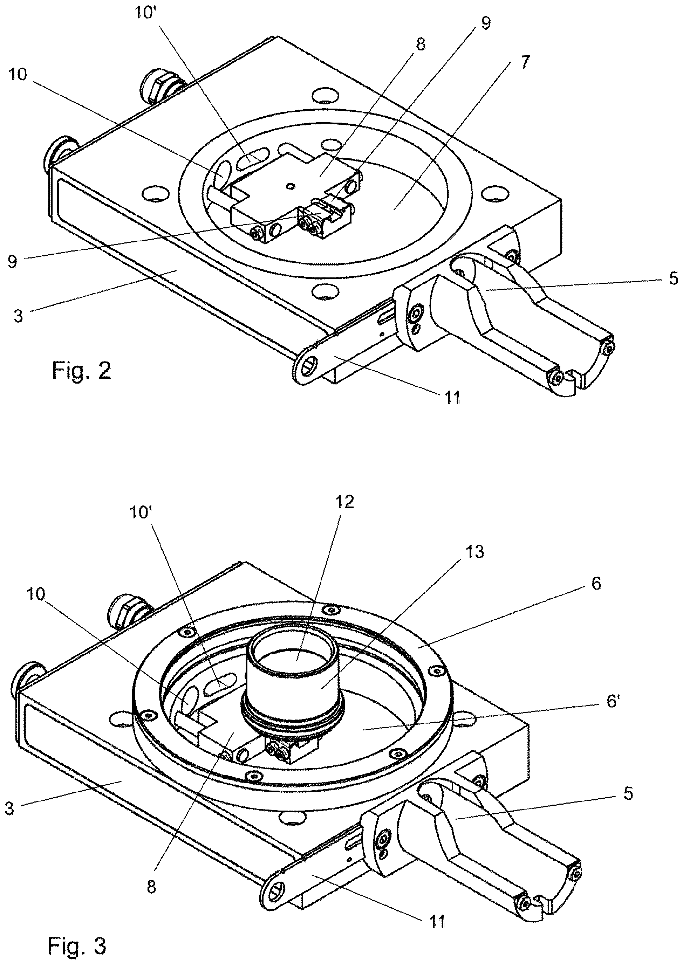

In Fig. 1 ist mit 1 ein erfindungsgemäßes Kryo-Lichtmikroskop bezeichnet, das unter anderem ein Objektiv 2 und einen Probentisch 3 umfasst. Der Probentisch 3 kann nicht nur in der Höhe sondern auch in zwei Horizontalrichtungen entsprechend den Pfeilen 4 verschoben werden, um relevante Bereiche einer Probe im Probentisch 3 aufzufinden. Der Probentisch verfügt über eine Öffnung 5 zur Zufuhr einer Probenträgerfassung zum Halter 8 für eine Probenträgerfassung, der in Fig. 2 dargestellt ist. Eine Abdeckung 6 liegt schwimmend auf dem Probentisch 3und kann daher auf diesem frei verschoben werden. Das Objektiv 2 ist durch die Ausnehmung in der Abdeckung 6 geführt und nimmt diese beim Verschieben des Probentisches 3 in Richtung der Pfeile 4 mit. Die Abdeckung 6 umfasst eine transparente Doppelscheibe 6'.

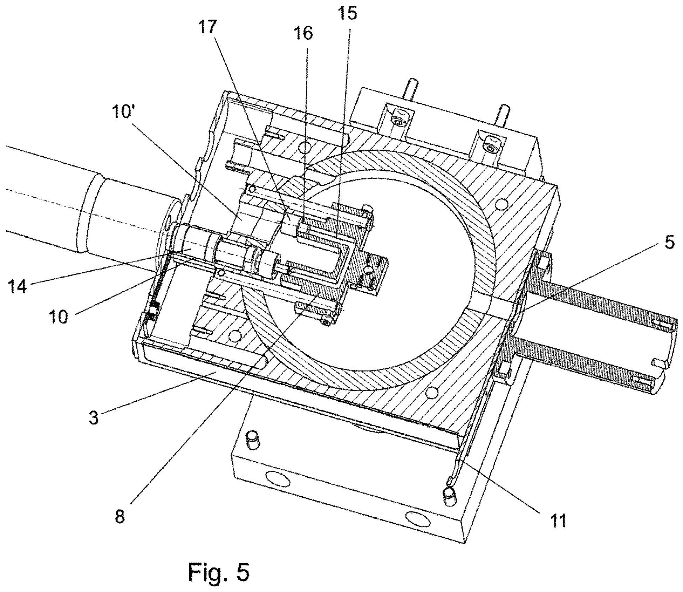

In Fig. 2 ist eine Ausnehmung 7 im Probentisch 3 zu erkennen, in der sich ein Halter 8 für eine Probenträgerfassung befindet. Der Halter 8 für eine Probenträgerfassung verfügt über Klammerelemente 9, die der klemmenden Festlegung einer nicht dargestellten Probenträgerfassung dienen. Der Halter 8 für eine Probenträgerfassung verfügt über eine Zuführung 10 und eine Abführung 10' für tiefkalten Stickstoff, um den Halter 8 für eine Probenträgerfassung kühlen zu können. Dies wird im Zusammenhang mit Fig. 5 näher beschrieben. In Fig. 2 ist weiters die Öffnung 5 zur Zufuhr einer Probenträgerfassung zu erkennen. Eine Verschlusseinrichtung 11 zum Verschließen der Öffnung 5 ist in Form eines Schiebers 11 ausgeführt.

In Fig. 3 ist nun zu erkennen, dass die Abdeckung 6 die Ausnehmung 7 im Probentisch 3 vollständig abdeckt, um den Zutritt von Feuchtigkeit aus der Umgebung möglichst gering zu halten. Die Ausnehmung 12 in der Abdeckung 6 ermöglicht es, das in Fig. 1 dargestellte Objektiv 2 durch die Ebene der Abdeckung 6 hindurch zu führen und damit unmittelbar an die Probe im Halter 8 für eine Probenträgerfassung zu bringen. Eine Manschette 13 ist an die Ausnehmung 12 angesetzt und erhöht weiter die Dichtwirkung zwischen Objektiv 2 und Abdeckung 6. Dadurch, dass die Abdeckung 6 schwimmend auf dem Probentisch 3 liegt, kann sie ohne weiteres vom Objektiv 2 mitgenommen und somit auf dem Probentisch 3 verschoben werden.

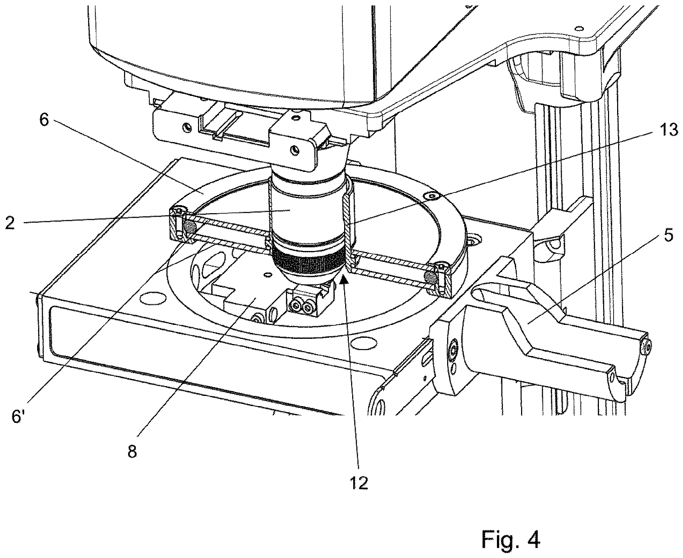

Fig. 4 zeigt die Durchführung des Objektivs 2 durch die Ausnehmung 12. Die Manschette 13 liegt mehr oder weniger am Objektiv 2 an und erhöht dadurch die Dichtwirkung zwischen dem Objektiv 2 und der Abdeckung 6. In Fig. 4 ist weiters zu erkennen, dass die Abdeckung 6 über eine Doppelscheibe 6' verfügt, um Kondensationsproblemen zuvorzukommen.

In Fig. 5 ist zu erkennen, dass eine Stickstoffleitung 14 durch die Zuführung 10 geführt ist, sodass tiefkalter, flüssiger Stickstoff in die Kühlleitung 15 des Halters 8 für eine Probenträgerfassung geführt werden kann. Die Kühlleitung 15 hat ein offenes Ende 16, an welches eine Metallfritte 17 angesetzt ist. Der Stickstoff verlässt die Ausnehmung 7 durch die Abführung 10'. Die beschriebene Stickstoff-Innenkühlung im Halter 8 für eine Probenträgerfassung sorgt für eine zuverlässige Kühlung der Proben und verdrängt Umgebungsfeuchtigkeit.

### Bezugszeichenliste:

- 1: Kryo-Lichtmikroskop
- 2: Objektiv
- 3: Probentisch
- 4: Pfeile
- 5: Öffnung
- 6: Abdeckung
- 6': transparente Doppelscheibe
- 7: Ausnehmung
- 8: Probenhalter
- 9: Klammerelemente
- 10: Zuführung
- 10': Abführung
- 11: Verschlusseinrichtung/Schieber
- 12: Ausnehmung
- 13: Manschette
- 14: Stickstoffleitung
- 15: Kühlleitung
- 16: offenes Ende
- 17: Metallfritte

## Patentansprüche

1. Lichtmikroskop (1) für die Kryo-Mikroskopie umfassend zumindest ein Objektiv (2), einen kühlbaren Halter (8) für eine Probenträgerfassung und einen Probentisch (3) mit einer Ausnehmung (7) für den kühlbaren Halter (8) für die Probenträgerfassung, wobei die Ausnehmung (7) von einer Abdeckung (6) bedeckt ist, die von der Abdeckung bedeckte Ausnehmung (7) ausgestaltet ist, im Betrieb mit flüssigem Stickstoff und/oder mit tiefkaltem Stickstoffgas versorgt zu werden, und der Probentisch (3) in zwei Horizontalrichtungen (4) verschiebbar ist,
wobei die Abdeckung (6) schwimmend auf dem Probentisch (3) liegt, um auf dem Probentisch (3) frei verschiebbar zu sein, und das Objektiv (2) durch eine dem Objektiv (2) entsprechende Ausnehmung (12) in der Abdeckung (6) geführt ist und die Abdeckung (6) beim Verschieben des Probentisches (3) mitnimmt, und
wobei die Ausnehmung (12) in der Abdeckung (6) ein kreisrundes Loch ist, dessen Durchmesser weniger als 2 mm größer ist als der Durchmesser des durch die Abdeckung (6) zu führenden Teils des Objektivs (2), um einen genügend großen Überdruck bei vertretbarem Stickstoffbedarf aufzubauen, um Feuchtigkeit von der Probe fernzuhalten.

2. Lichtmikroskop nach Anspruch 1, **dadurch gekennzeichnet, dass** der Probentisch (3) kühlbar ist.

3. Lichtmikroskop nach einem der Ansprüche 1 bis 2, **dadurch gekennzeichnet, dass** der Probentisch (3) und/oder der Halter 8 für die Probenträgerfassung eine Stickstoff-Innenkühlung aufweist/aufweisen.

4. Lichtmikroskop nach einem der Ansprüche 1 bis 3, **dadurch gekennzeichnet, dass** der Probentisch (3) eine Öffnung (5) zur Zufuhr der Probenträgerfassung zum Halter (8) für die Probenträgerfassung aufweist.

5. Lichtmikroskop nach Anspruch 4, **dadurch gekennzeichnet, dass** die Öffnung (5) zur Zufuhr der Probenträgerfassung mittels einer Verschlusseinrichtung (10) verschließbar ist.

6. Lichtmikroskop nach einem der Ansprüche 1 bis 5, **dadurch gekennzeichnet, dass** die Abdeckung (6) eine transparente Doppelscheibe (6') aufweist.

7. Verfahren zum Kühlen eines Halters (8) für eine Probenträgerfassung in einem Lichtmikroskop (1) für die Kryo-Mikroskopie nach einem der Ansprüche 1 bis 6, mittels Durchströmen einer an zumindest einem Ende offenen Kühlleitung (15) im Halter (8) mit flüssigem Stickstoff, **dadurch gekennzeichnet, dass** die Menge an flüssigem Stickstoff so bemessen wird, dass am zumindest einen offenen Ende (16) der Kühlleitung (15) der gesamte Stickstoff gasförmig vorliegt.

8. Verfahren nach Anspruch 7, **dadurch gekennzeichnet, dass** das zumindest eine offene Ende (16) der Kühlleitung (15) mit einer Metallfritte (17) verschlossen ist.

## Claims

1. Light microscope (1) for cryo-microscopy comprising at least one objective (2), a coolable holder (8) for a specimen carrier mount and a specimen stage (3) with a recess (7) for the coolable holder (8) for the specimen carrier mount, wherein the recess (7) is covered by a cover (6), the recess (7) covered by the cover is designed to be supplied with liquid nitrogen and/or with cryogenic nitrogen gas during operation, and the sample table (3) is displaceable in two horizontal directions (4),
wherein the cover (6) lies floating on the sample table (3) in order to be freely displaceable on the sample table (3), and the objective (2) is guided through a recess (12) in the cover (6) corresponding to the objective (2) and entrains the cover (6) when the sample table (3) is displaced, and
wherein the recess (12) in the cover (6) is a circular hole whose diameter is less than 2 mm larger than the diameter of the part of the objective (2) to be passed through the cover (6), in order to build up a sufficiently large overpressure with a reasonable nitrogen requirement to keep moisture away from the specimen.

2. Light microscope according to claim 1, **characterised in that** the specimen stage (3) can be cooled.

3. Light microscope according to any one of the claims 1 to 2, **characterised in that** the specimen stage (3) and/or the holder 8 for the specimen carrier mount has/have a nitrogen internal cooling.

4. Light microscope according to any one of claims 1 to 3, **characterised in that** the sample stage (3) has an opening (5) for feeding the sample carrier mount to the holder (8) for the sample carrier mount.

5. Light microscope according to claim 4, **characterised in that** the opening (5) for feeding the specimen carrier mount can be closed by means of a closing device (10).

6. Light microscope according to any one of claims 1 to 5, **characterised in that** the cover (6) has a transparent double pane (6').

7. Method for cooling a holder (8) for a sample carrier mount in an optical microscope (1) for cryo-microscopy according to one of claims 1 to 6, by means of flowing liquid nitrogen through a cooling line (15) in the holder (8), which cooling line (15) is open at at least one end, **characterised in that** the quantity of liquid nitrogen is dimensioned such that all the nitrogen is present in gaseous form at the at least one open end (16) of the cooling line (15).

8. Method according to claim 7, **characterised in that** the at least one open end (16) of the cooling line (15) is closed with a metal frit (17).

## Revendications

1. Microscope optique (1) pour la cryo-microscopie comprenant au moins un objectif (2), un support (8) pouvant être refroidi pour une saisie de support d'échantillon et une table d'échantillon (3) avec un évidement (7) pour le support (8) pouvant être refroidi pour la saisie de support d'échantillon, l'évidement (7) étant recouvert par un couvercle (6), l'évidement (7) recouvert par le couvercle est conçu pour être alimenté en azote liquide et/ou en azote gazeux cryogénique pendant le fonctionnement, et la table d'échantillons (3) peut être déplacée dans deux directions horizontales (4),
le couvercle (6) étant posé de manière flottante sur la table d'échantillons (3) afin de pouvoir être déplacé librement sur la table d'échantillons (3), et l'objectif (2) étant guidé à travers un évidement (12) correspondant à l'objectif (2) dans le couvercle (6) et entraînant le couvercle (6) lors du déplacement de la table d'échantillons (3), et l'évidement (12) dans le couvercle (6) est un trou circulaire dont le diamètre est supérieur de moins de 2 mm au diamètre de la partie de l'objectif (2) à guider à travers le couvercle (6), afin d'établir une surpression suffisamment importante avec une consommation d'azote raisonnable pour maintenir l'humidité à distance d'échantillon.

2. Microscope optique selon la revendication 1, **caractérisé en ce que** la platine porte-échantillon (3) peut être refroidie.

3. Microscope optique selon l'une des revendications 1 à 2, **caractérisé en ce que** la platine porte-échantillon (3) et/ou le support 8 pour la saisie du porte-échantillon présente(nt) un refroidissement interne à l'azote.

4. Microscope optique selon l'une des revendications 1 à 3, **caractérisé en ce que** la platine porte-échantillon (3) présente une ouverture (5) pour l'amenée de la saisie du porte-échantillon au support (8) pour la saisie du porte-échantillon.

5. Microscope optique selon la revendication 4, **caractérisé en ce que** l'ouverture (5) pour l'amenée de la monture du porte-échantillon peut être fermée au moyen d'un dispositif de fermeture (10).

6. Microscope optique selon l'une des revendications 1 à 5, **caractérisé en ce que** le couvercle (6) comprend une double vitre transparente (6').

7. Procédé de refroidissement d'un support (8) pour une monture de porte-échantillon dans un microscope optique (1) pour la cryo-microscopie selon l'une des revendications 1 à 6, au moyen d'un écoulement d'azote liquide à travers une conduite de refroidissement (15) ouverte à au moins une extrémité dans le support (8), **caractérisé en ce que** la quantité d'azote liquide est dimensionnée de telle sorte que la totalité de l'azote se présente sous forme gazeuse à au moins une extrémité ouverte (16) de la conduite de refroidissement (15).

8. Procédé selon la revendication 7, **caractérisé en ce que** la au moins une extrémité ouverte (16) de la conduite de refroidissement (15) est fermée par une fritte métallique (17).
